# EUROPÄISCHE PATENTANMELDUNG

(11) **EP 2 194 370 A1**
(43) Veröffentlichungstag der Anmeldung: **09.06.2010**
(21) Anmeldenummer: 08020930.7
(22) Anmeldetag: 03.12.2008
(51) Int. Cl.: G01N 15/06

(54) **Kondensationspartikelzähler**

(71) Anmelder: GIP Messinstrumente GmbH, 06774 Pouch (DE)
(72) Erfinder: Grimm,Hans Jürgen, 83404 Ainring (DE)
(74) Vertreter: Tragsdorf, Bodo

(57) **Zusammenfassung**

Kondensationspartikelzähler (CPC) zur Bestimmung der Konzentration von in einem Gasstrom, wie z.B. Luft, enthaltenen Partikeln (Aerosol) mit Größen von wenigen Nanometern bis zu einigen Mikrometern, die durch Kondensationswachstum vergrößert werden, wobei die Messung der Partikelkonzentration vorzugsweise nach dem Prinzip der Streulichtmessung erfolgt.
Beim Transport eines CPC's besteht die Gefahr, dass Arbeitsflüssigkeit in die Messzelle gelangen kann und der CPC verunreinigt wird. Zur Lösung dieses Problems wird vorgeschlagen, dass im Saturator (1) eine die Aerosol-Austrittsöffnung (23) verschließbare flüssigkeitsdichte Absperrvorrichtung (24) angeordnet ist, die in eine Öffnungs- und Schließstellung bewegbar ist.

## Beschreibung

Die Erfindung bezieht sich auf einen Kondensationspartlkelzähler zur Bestimmung der Konzentration von in einem Gasstrom, wie z.B. Luft, enthaltenen Partikeln (Aerosol) mit Größen von wenigen Nanometern bis zu einigen Mikrometern, die durch Kondensationswachstum vergrößert werden, wobei die Messung der Partikelkonzentration vorzugsweise nach dem Prinzip der Streullchtmessung erfolgt.

Kondensationspartikelzähler sind bereits seit langem bekannt und werden als Condensation Particle Counter (CPC) oder auch als Condensation Nucleous Counter (CNC) bezeichnet. Die wesentlichen Bauteile dieser Geräte sind ein beheizter Saturator bzw. Sättiger, ein Kondensator und eine Messzelle, wie z.B. eine Laser-Optik-Einhelt mit Fotodiode.

Der Volumenstrom des Aerosols wird über eine am Auslass des Gerätes angeordnete Pumpe erzeugt.

Der Saturator besteht aus einem porösen Bauteil, z.B. einem Rohr mit einem porösen Belag, wobei der poröse Teil mit einer zu verdampfenden Arbeitsflüssigkeit, wie beispielsweise Butanol, Alkohol oder Wasser, in Kontakt steht. Durch die Beheizung des Sättigers wird der Dampfdruck der Arbeltsflüssigkeit erhöht. Durch eine Temperierung kann die Dampfmenge eingestellt werden. Das Aerosol wird im Saturator mit dem Dampf durchmischt.

Partikel und Dampf gelangen anschließend in den gekühlten Kondensator, wobei der übersättigte Dampf auf den Partikeln kondensiert. Durch den Kondensationsprozess vergrößern sich die Partikel (Kondensationswachstum) auf eine Größe von einigen Mikrometern. Dieses Wachstum ergibt sich aus der Übersättigung des kondensierten Dampfes im umschließenden Gas. Während des Kondensationsvorganges anfallendes Kondensat, das aus der im Gas enthaltenen Feuchtigkeit (Luftfeuchte) und kondensierter Arbeitsflüssigkeit besteht, wird aus dem Kondensator abgeführt. Dieses wird entweder entsorgt oder das kondensierte Wasser wird von der Arbeitsflüssigkeit getrennt, wie in der US 5,118,959 A beschrieben.

Die im Kondensator aufkondensierten Partikel gelangen über eine Düse in eine optische Messzelle und werden in dieser gezählt.

Die bekannten CPC's bestehen aus einem kompakten Gehäuse, in dem die einzelnen Baugruppen angeordnet sind. In der Regel sind der Kondensator und die nachgeordnete Messzelle in vertikaler Ausrichtung angeordnet. Der Saturator kann in vertikaler oder horizontaler Lage angeordnet sein. In der DE 103 92 592 T5 ist ein Kondensationskemzähler mit einer vertikalen Anordnung des Sättigers beschrieben, wobei dieser aus einem porösen Metallrohr besteht. Aus der DE 40 19 676 C1 ist ein Kondensationskernzähler mit einem horizontal angeordneten Saturator bekannt. Dieser besteht aus einem Gehäuse mit einem zentralen Kanal, der zur Bildung einer Befeuchtungszone von einem porösen Material umgeben ist, wobei zwischen dem porösen Material und der Gehäusewandung ein Hohlraum angeordnet Ist, in dem sich die Arbeitsflüssigkeit befindet. Das Gehäuse des Saturators Ist über ein Verbindungsstück mit dem vertikal angeordneten Kondensator verbunden.

Ein Saturator mit einem in Strömungsrichtung leicht ansteigend verlaufenden Kanal mit einem Faservlies als poröses Material, das in einen mit Arbeitsflüssigkeit gefüllten Pool eintaucht, ist aus der WO 02/29382 A1 bekannt.

Die eingesetzten Messzellen sind sehr empfindlich gegenüber Verunreinigungen. Diese führen zu Verfälschungen der Messergebnisse. Das poröse Material des Sättigers ist im Betriebszustand mit Arbeitsflüssigkeit, wie z.B. Butanol, getränkt. Auch nach dem Abschalten des CPC's muss unbedingt darauf geachtet werden, dass keine Tropfen der Arbeitsflüssigkeit in die Messzelle gelangen können.

Mobile CPC's werden oft von einem Standort zu einem anderen Standort transportiert. Auch bei stationären CPC's kann es vorkommen, dass diese umgesetzt werden oder aus anderen Gründen transportiert oder zwischengelagert werden müssen. Neu hergestellte CPC's werden vor ihrer Auslieferung einem Funktionstest unterzogen. Ein Versand der CPC's ist erst nach einer Trockenlegung des Sättigers möglich. Diese dauert in der Regel mehrere Stunden und ist mit einem zusätzlichen Aufwand verbunden. Ein Transport eines CPC's ohne vorherige Trockenlegung des Sättigers ist nur möglich, wenn dieser in "aufrechter Lage" transportiert wird, ansonsten besteht die Gefahr, dass Arbeitsflüssigkeit in die Messzelle gelangen kann.

Der Erfindung liegt die Aufgabe zugrunde, einen Kondensationspartikelzähler bereitzustellen, der ohne vorherige Trockenlegung und ohne Einschränkungen transportiert werden kann.

Erfindungsgemäß wird die Aufgabe durch die im Anspruch 1 angegebenen Merkmale gelöst. Vorteilhafte Ausgestaltungen und Weiterbildungen sind Gegenstand der Ansprüche 2 bis 11.

Als Lösung wird vorgeschlagen, dass entweder im Saturator eine die Aerosol-Austrittsöffnung verschließbare oder im Strömungsweg zwischen Saturator und Messkammer eine flüssigkeitsdichte Absperrvorrichtung angeordnet ist, die in eine Öffnungs- und Schließstellung bewegbar ist.

Vorzugsweise besteht die im Saturator angeordnete Absperrvorrichtung aus einem drehbaren Verschlusskörper mit einer Dichtung, wobei die in Richtung zur Eintrittsöffnung des Saturators zeigende Stirnseite des Verschlusskörpers abgeschrägt oder gekrümmt ist, derart, dass im geöffneten Zustand der obere Abschnitt des Verschlusskörpers, In Strömungsrichtung gesehen, hinter der Aerosol-Austrittsöffnung liegt und im geschlossenen Zustand der untere Abschnitt die Aerosol-Austrittsöffnung dicht verschließt.

Gemäß einer bevorzugten Ausführung ist an der in Richtung zur Eintrittsöffnung des Saturators zeigenden Stirnseite des Verschlusskörpers ein Verstellelement angeordnet, das sich bis zur Eintrittsöffnung des Saturators erstreckt und an seinem vorderen Ende eine Aufnahme für ein Werkzeug besitzt. Um das Werkzeug einfach und sicher einführen zu können, besitzt das Anschlussstück des Saturators einen verlängerten Abschnitt, der sich bis zur äußeren Gehäusewand des CPC-Gerätes erstreckt.

Das Verstellelement als längliches Bauteil kann unterschiedlich ausgebildet sein, z. B. als Rohr oder stabförmiges Element. Beispielsweise kann es als Hüllrohr ausgeführt sein, das zusammen mit dem Verschlusskörper drehbar auf einem Verdrängungsstab angeordnet ist, der zentrisch an der zur Eintrittsöffnung gegenüberliegenden Stirnseite befestigt Ist.

Bei einer Ausführung des Saturators ohne Verdrängungsstab kann das Verstellelement auch an der vertikalen Stirnseite des Verschlusskörpers befestigt sein, wobei es in der benachbarten Stirnseite des Saturators zentrisch gelagert ist und sich bis zur äußeren Gehäusewand des CPC-Gerätes erstreckt.

Sowohl zwischen Saturator und Kondensator als auch zwischen Kondensator und Messzelle ist eine Isolierbuchse angeordnet. Vorzugsweise ist in einer dieser Isolierbuchsen eine Absperrvorrichtung integriert, z.B. als Kugel- oder Ringventil.

Es sollte darauf geachtet werden, dass die den Strömungsweg abdichtenden Teile der Absperrvorrichtung im geöffneten Zustand nicht die Aerosolströmung beeinträchtigen.

Da die Absperrvorrichtung nur in bestimmten Situationen benötigt wird, ist es im praktischen Betrieb des CPC's ausreichend, wenn diese nur manuell betätigbar ist. Zusätzlich kann es auch vorgesehen sein, dass das unmittelbare Betätigungselement gegen ein unbeabsichtigtes Verstellen gesichert ist.

Selbstverständlich kann auch eine elektrische Betätigung vorgesehen werden, die jedoch mit einem höheren Aufwand verbunden ist.

Die Absperrvorrichtung kann in unterschiedlichen Bauarten des CPC's zur Anwendung kommen.

Vorzugsweise ist der Einsatz bei CPC's vorgesehen, bei denen der Saturator entweder horizontal oder horizontal leicht geneigt, ansteigend in Strömungsrichtung, angeordnet Ist.

Die Absperrvorrichtung ermöglicht, dass es während des Transportes des CPC's zu keinen Verunreinigungen der Messzelle kommen kann.

Die Erfindung soll nachstehend an einem Ausführungsbelsplel näher erläutert werden.

In der zugehörigen Zeichnung zeigen
- Fig. 1: eine vereinfachte schematische Darstellung eines Kondensatlonspartikelzählers (CPC) mit einer Absperrvorrichtung im Saturator, als Längsschnitt,
- Fig. 2: einen Schnitt gemäß der Linie A-A in Fig. 1,
- Fig. 3: die Einzelheit X in Fig. 1 in vergrößerter Darstellung, als Längsschnitt,
- Fig. 4: eine zweite Ausführungsvariante einer Absperrvorrichtung im Saturator, als Längsschnitt,
- Fig. 5: die Einzelheit X in Fig. 4 in vergrößerter Darstellung, als Längsschnitt, und
- Fig. 6: eine dritte Ausführung mit einer Absperrvorrichtung außerhalb des Saturators in vereinfachter schematischer Darstellung, als Längsschnitt.

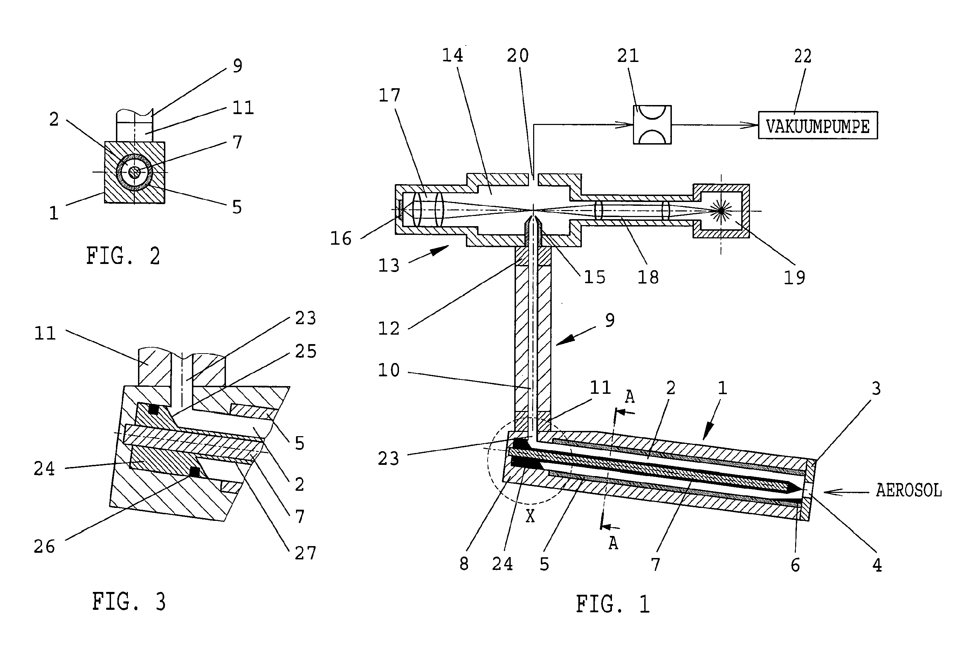

Der in den Figuren 1 bis 3 gezeigte Kondensationspartikelzähler (CPC) besteht aus den Baugruppen Saturator 1, Kondensator 9 und optische Messzelle 13, die in einem nicht näher gezeigten Gehäuse angeordnet sind. Der Saturator 1 ist in einem Winkel von ca. 6 bis 7° geneigt angeordnet, ansteigend in Strömungsrichtung. Er besteht aus einem länglichen, quadratischen Aluminiumblock mit einem zentralen, ringförmigen Strömungskanal 2. Der Aluminiumblock Ist mit einer nicht näher gezeigten elektrischen Heizeinrichtung ausgestattet. An der Eintrittsseite für das Aerosol befindet sich ein Anschlussstück 3 mit einer zentralen Eintrittsöffnung 4, über die das Aerosol in den Strömungskanal 2 gelangt. Im Strömungskanal 2 ist ein geschäumtes Polyethylenrohr 5 eingesetzt, das an der Innenwandung des rohrförmigen Kanals anliegt. Im Bereich der Eintrittsöffnung 4 befindet sich Im unteren Teil des Saturators 1 eine Vertiefung bzw. Reservoir 6 zur Aufnahme von Arbeitsflüssigkeit. Als Arbeitsflüssigkeit wird vorzugsweise Butanol eingesetzt. Der untere Teil des vorderen Abschnittes des geschäumten Polyethylenrohres 5 taucht in das mit Butanol gefüllte Reservoir 6 ein und saugt die Flüssigkeit Butanol wie ein Schwamm auf. Im Strömungskanal 2 des Saturators 1 ist zentrisch ein Verdrängungsstab 7 angeordnet. Dieser ist als kreisrunder Vollstab ausgeführt und am zur Eintrittsöffnung 4 gegenüberliegenden Abschnitt 8 befestigt. Die Befestigung des Verdrängungsstabes 7 kann z.B. durch eine Presspassung oder durch Gewinde erfolgen. Der Verdrängungsstab 7 erstreckt sich bis in die Nähe der Eintrittsöffnung 4, wobei das vordere Ende des Stabes 7 spitzförmig ausgebildet ist. Der Verdrängungsstab 7 besteht aus einem wärmeleitenden Material (Aluminium) und wird infolge der Erwärmung des Saturators 1 mit erwärmt. Durch diesen wird ein gleichmäßigeres Strömungsprofil erreicht, das zu einer Verkürzung der Reaktionszeit bei Konzentratlonsänderungen führt.

Die Absperrvorrichtung ist bei dieser Ausführung im Saturator 1 angeordnet und ermöglicht ein flüsslgkeitsdichtes Verschließen der Austrittsöffnung 23. Sie besteht aus einem in den ringförmigen Strömungskanal 2 eingesetzten zylinderförmigen Verschlusskörper 24, der auf dem Verdrängungsstab 7 drehbeweglich geführt ist. Die in Richtung zur Eintrittsöffnung 4 zeigende Stirnseite 25 des Verschlusskörpers 24 ist abgeschrägt, vorzugsweise in einem Winkel von 45°. Wie insbesondere in Fig. 3 zu sehen ist, ist aufgrund der geneigt verlaufenden Stirnseite 25 der untere Abschnitt länger als der obere Abschnitt, der hinter der Austrittsöffnung 23 endet und diese freigibt. Parallel zur schräg verlaufenden Stirnseite 25 ist In dem Verschlusskörper 24 eine Ringnut angeordnet, in die eine umlaufende Dichtung (0-Ring) 26 eingesetzt ist. Die Ringnut ist so angeordnet, dass die Dichtung 26 im geschlossenen Zustand des Verschlusskörpers vor der Austrittsöffnung 23 liegt. Der Verschlusskörper 24 ist an der schräg verlaufenden Stirnseite 25 mit einem Rohr 27 verbunden, das den Verdrängungsstab 7 umgibt und sich bis kurz vor die Eintrittsöffnung 4 des Saturators 1 erstreckt. Das Hüllrohr 27 liegt an dem feststehenden Verdrängungsstab 7 drehbeweglich an. Die Verstellung des Verschlusskörpers 24 von der Öffnungs- in die Schließstellung erfolgt von der Eintrittsöffnung 4 aus. Das nicht gezeigte vordere Ende des Hüllrohres 27 besitzt eine Aufnahme für einen über die Eintrittsöffnung 4 einführbaren Steckschlüssel oder geeignetes Werkzeug. An dem Anschlussstück 3 kann auch noch eine nicht näher gezeigte Führung für den Steckschlüssel angeordnet sein. Diese erstreckt sich bis zur Außenseite des Gerätes. Vom Bediener des Gerätes kann der Schlüssel bzw. das Werkzeug somit problemlos eingeführt werden. Durch eine manuelle Drehbewegung des eingesteckten Schlüssels wird das Hüllrohr 27 mit dem Verschlusskörper 24 in die Schließstellung gedreht. Der längere Abschnitt des Verschlusskörpers 24 mit der Dichtung 26 befindet sich nunmehr an der oberen Seite der Saturaorkammer 2 und sperrt die Austrittsöffnung 23 des Saturators 1 flüssigkeitsdicht ab. Das CPC-Gerät kann somit problemlos transportiert werden, ohne der Gefahr ausgesetzt zu sein, dass angesammeltes Butanol in die Messzelle gelangen kann. Vor einer Wiederinbetriebnahme des Gerätes wird der Verschlusskürper 24 wieder in seine Ausgangsstellung bewegt und die Eintrittsöffnung 23 freigegeben. Das Hüllrohr 27 sollte möglichst glatt sein, um die Strömung des Aerosols nicht nachteilig zu beeinflussen.

Bei einer Anordnung der Absperrvorrichtung im Saturator 1 sollte diese aus einem Material mit guter Wärmeleitfähigkeit bestehen.

Die in den Figuren 1 bis 3 gezeigte Absperrvorrichtung kann auch ohne Verdrängungsstab eingesetzt werden.

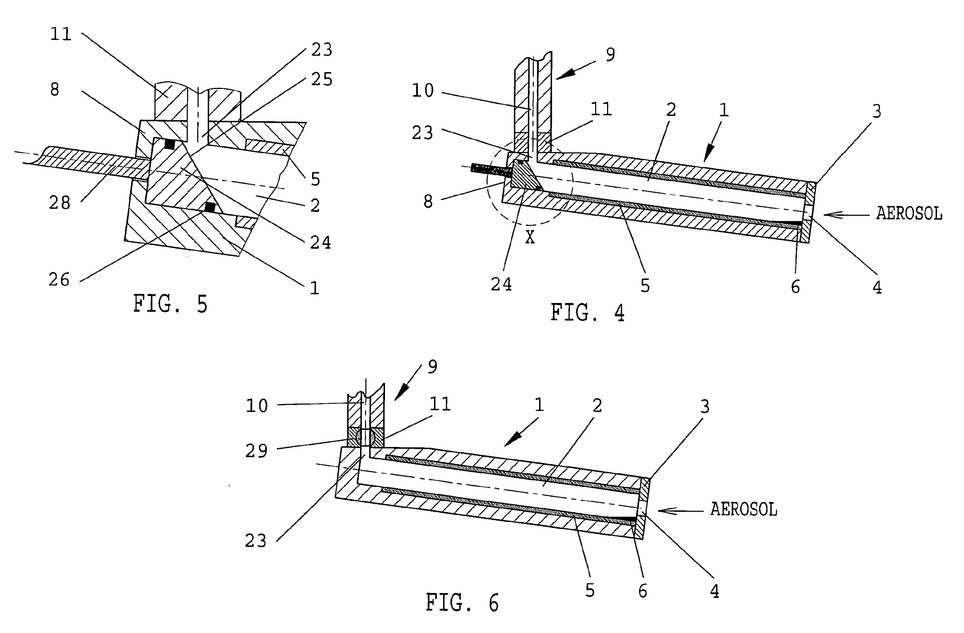

Eine entsprechende Ausführungsvariante ist in den Figuren 4 und 5 gezeigt. Die Betätigung des Verschlusskörpers 24 erfolgt bei dieser Ausführung nicht von der Eintrittsseite des Saturators aus, sondern von der gegenüberliegenden Seite. An der vertikalen Stirnseite des Verschiusskörpers 24 ist ein Verstellelement 28 befestigt, das in einer Führung des stirnseitigen Abschnitts 8 des Saturators 1 geführt ist. Ansonsten ist der Verschlusskörper 24 analog ausgebildet, wie der in den Figuren 1 bis 3 Gezeigte. Die abgeschrägte Stirnseite 25 kann zur Beeinflussung des Strömungsverlaufes des Aerosols auch gekrümmt ausgeführt sein.

Am Strömungsausgang des Saturators 1 ist der Kondensator 9 angeschlossen. Der Kondensator 9 ist von einer nicht näher dargestellten Kühlvorrichtung umgeben und besitzt einen zentralen Kanal oder eine Kammer 10. Der Kondensator 9 ist vertikal angeordnet und über geeignete Befestigungsmittel mit dem Saturator 1 verbunden, wobei zwischen dem Saturator 1 und dem Kondensator 9 ein thermische lsolierbuchse 11 angeordnet ist, um einen Wärmeübergang vom Saturator 1 auf den Kondensator 9 zu verhindern. Auf dem Kondensator 9 sitzt die optische Messzelle 13. Zwischen der Messzelle 13 und dem Kondensator 9 ist ebenfalls eine thermische Isolierbuchse 12 angeordnet. Am Eintritt in die Messkammer 14 ist eine Düse 15 angeordnet. Die Messzelle 13 zur Erfassung der Anzahl der im Aerosol enthaltenen Partikel besteht in an sich bekannter Bauart aus einem optischen Empfänger 16, einem Fotodiodendetektor, einem Linsensystem als Empfangsoptik 17, einer Laserlichtquelle 19 und einem Linsensystem als Laseroptik 18. Hinter dem Auslass 20 der Messkammer 14 sind eine kritische Düse 21 und eine Vakuumpumpe 22 angeschlossen, über die der Volumenstrom des Aerosols erzeugt wird. Die Pumpe 22 kann entweder Innerhalb oder außerhalb des CPC-Gerätes angeordnet sein.

In der Figur 6 ist noch eine weitere Ausführungsvariante einer Absperrvorrichtung gezeigt. Die Absperrvorrichtung kann z.B. auch als Kugelhahn 29 In der thermischen isolierbuchse 11, die zwischen Saturator 1 und Kondensator 9 angeordnet ist, integriert sein. Das nicht näher gezeigte Betätigungselement zur Verstellung des Kugelhahns ist bis an die Außenselte des Gerätes geführt. Durch eine Drehbewegung des Betätigungselementes kann das Ventil In die Öffnungs- und Schließstellung bewegt werden.

Analog kann die Absperrvorrichtung auch in der oberen Isolierbuchse 12 angeordnet sein. Falls gewünscht, kann die Verstellung der Absperrvorrichtung auch auf elektrischem Weg erfolgen, z.B. mittels Stellmotor oder einer elektromagnetischen Steuerung.

### Die Funktionsweise des CPC's ist folgende:

Mit Inbetriebnahme des CPC's wird der Aluminiumblock, der Saturator 1, über die nicht näher gezeigte Heizeinrichtung auf Betriebstemperatur erwärmt. Im Reservoir 6 des Saturators 1 befindet sich Butanol als Arbeitsflüssigkeit. Beim Einsatz von Butanol wird der Saturator auf eine Temperatur von ca. 30 bis 40 °C erwärmt. Das im Saturator 1 angeordnete geschäumte PE-Rohr ist mit Butanol getränkt, das aufgrund der Erwärmung verdampft. Über die Eintrittsöffnung 4 gelangt bei Betrieb der Vakuumpumpe 22 Aerosol in die Saturatorkammer 2. Das Aerosol wird mit Butanoldampf gesättigt und strömt am Ende des Saturators 1 über die Austrittsöffnung 23 in den gekühlten Kondensator 9. In diesem kondensiert der übersättigte Dampf auf den im Aerosol enthaltenen Partikeln. Durch den Kondensationsprozess findet ein Partikelwachstum, bis auf eine Größe von einigen Mikrometern, statt. Das in der Kondensationskammer 10 anfallende Kondensat, das aus im Gasstrom enthaltener Feuchtigkeit und kondensiertem Butanol besteht, wird über eine Leitung abgepumpt und entsorgt.

Die mit Butanoldampf aufkondensierten Partikel gelangen von der Kondensatorkammer 10 über die Düse 15 mit erhöhter Geschwindigkeit in die Messkammer 14 der Messzelle 13, die als Laser-Optik-Einheit ausgeführt ist. Die im Gasstrom enthaltenen Partikel kreuzen einen Laserstrahl, wodurch jedes Tröpfchen (Partikel) Licht auf eine Fotodiode streut. Diese Signale werden auf elektronischem Weg kontinuierlich gezählt und als Partikel/cm' im Sekundentakt auf einem LCD-Bildschirm angezeigt und gespeichert oder auf ein externes Datenverarbeitungsgerät übertragen.

Der Flüssigkeitsstand im Reservoir 6 des Saturators 1 wird mittels eines Sensors überwacht und bei zu niedrigem Flüssigkeitsstand wird automatisch Butanol aus einem Vorratsbehälter nachgefüllt.

Nach dem Abschalten des CPC's befinden sich im Saturator noch geringe Mengen an Arbeltsflüsslgkeit, die nicht mit der Messzelle in Kontakt gelangen dürfen. Mit der erfindungsgemäß vorgeschlagenen Absperrvorrichtung kann dies nunmehr sicher verhindert werden. Nach Betätigung der Absperrvorrichtung in die Schließstellung kann der CPC in jede beliebige Lage bewegt werden, ohne dass Arbeitsflüssigkeit in die Messzelle gelangen kann. Ein Verschicken bzw. Transport des CPC's kann nunmehr ohne besondere Vorsichtsmaßnahmen erfolgen. Der CPC kann nach einem Versand am neuen Standort sofort wieder in Betrieb genommen werden.

Von besonderer Bedeutung ist dies auch für mobile, batteriebetriebene CPC's.

## Patentansprüche

1. Kondensationspartikelzähler zur Bestimmung der Konzentration von in einem Gasstrom enthaltenen Partikeln (Aerosol), bestehend aus einem beheizbaren Saturator (1) mit einer Eintrittsöffnung (4) und einer Austrittsöffnung (23) sowie einem rohrförmigen Strömungskanal (2) mit einer porösen Struktur oder einer porösen Einlage (5) zur Aufnahme von zu verdampfender Arbeitsflüssigkeit, wobei das zugeführte Aerosol durch die verdampfte Arbeitsflüssigkeit erwärmt und gesättigt wird, einem nachgeschalteten Kondensator (9) zur Übersättigung und Erzielung eines Kondensationswachstums der im Aerosol enthaltenen Partikel, einer optischen Messzelle (13) mit einer Messkammer (14) zur zahlenmäßigen Erfassung der im Aerosol enthaltenen Partikel, und einer Pumpe (22) zum Transport des Gases entlang des Strömungsweges (2, 10, 20), **dadurch gekennzeichnet, dass** entweder im Saturator (1) eine die Aerosol-Austrittsöffnung (23) verschließende oder im Strömungsweg (10) zwischen Saturator (1) und Messkammer (14) eine flüssigkeitsdichte Absperrvorrichtung (24 und 27, 24 und 28, 29) angeordnet ist, die in eine Öffnungs- und Schließstellung bewegbar ist.

2. Kondensationspartikelzähler nach Anspruch 1, **dadurch gekennzeichnet, dass** die im Saturator (1) angeordnete Absperrvorrichtung aus einem drehbaren Verschlusskörper (24) mit einer Dichtung (26) besteht, wobei die in Richtung zur Eintrittsöffnung (4) des Saturators (1) zeigende Stirnseite (25) abgeschrägt oder gekrümmt ist, derart, dass im geöffneten Zustand der obere Abschnitt des Verschlusskörpers (24), in Strömungsrichtung gesehen, hinter der Austrittsöffnung (23) liegt und im geschlossenen Zustand der untere Abschnitt die Austrittsöffnung (23) dicht verschließt.

3. Kondensationspartikelzähler nach einem der Ansprüche 1 oder 2, **dadurch gekennzeichnet, dass** an der in Richtung zur Eintrittsöffnung (4) des Saturators (1) zeigenden Stirnseite (25) des Verschlusskörpers (24) ein Verstellelement (27) angeordnet ist, das sich bis zur Eintrittsöffnung (4) des Saturators (1) erstreckt und an seinem vorderen Ende eine Aufnahme für ein Werkzeug besitzt.

4. Kondensationspartikelzähler nach einem der Ansprüche 1 bis 3, **dadurch gekennzeichnet, dass** das Anschlussstück (3) des Saturators (1) einen verlängerten Abschnitt besitzt, der sich bis zur äußeren Gehäusewand des CPC-Gerätes erstreckt und in den das Werkzeug zur Bewegung des Verschlusskörpers (24) einführbar ist.

5. Kondensationspartikelzähler nach einem der Ansprüche 1 bis 4, **dadurch gekennzeichnet, dass** das Verstellelement (27) als Rohr ausgebildet ist.

6. Kondensationspartikelzähler nach einem der Ansprüche 1 bis 5, **dadurch gekennzeichnet, dass** das rohrförmige Verstellelement (27) als Hüllrohr zusammen mit dem Verschlusskörper (24) drehbar auf einem Verdrängungsstab (7) angeordnet ist, der zentrisch an der zur Eintrittsöffnung (4) gegenüberliegenden Stirnseite (8) befestigt ist.

7. Kondensationspartikelzähler nach einem der Ansprüche 1 bis 6, **dadurch gekennzeichnet, dass** an der vertikalen Stirnseite des Verschlusskörpers (24) ein Verstellelement (28) befestigt ist, das in der benachbarten Stirnseite (8) des Saturators (1) zentrisch gelagert ist und sich bis zur äußeren Gehäusewand des CPC-Gerätes erstreckt.

8. Kondensationspartikelzähler nach einem der Ansprüche 1 bis 7, **dadurch gekennzeichnet, dass** zwischen Saturator (1) und Kondensator (9) eine Isolierbuchse (11) angeordnet ist, in der eine Absperrvorrichtung (29) integriert ist.

9. Kondensationspartikelzähler nach einem der Ansprüche 1 bis 8, **dadurch gekennzeichnet, dass** zwischen Kondensator (9) und Messzelle (13) eine Isolierbuchse (12) angeordnet ist, in der eine Absperrvorrichtung integriert ist.

10. Kondensationspartikelzähler nach einem der Ansprüche 1 bis 9, **dadurch gekennzeichnet, dass** die Absperrvorrichtung (24 und 27, 24 und 28, 29) elektrisch betätigbar sind.

11. Kondensationspartikelzähler nach einem der Ansprüche 1 bis 10, **dadurch gekennzeichnet, dass** der Saturator (1) horizontal oder horizontal leicht geneigt, ansteigend in Strömungsrichtung, angeordnet ist.
